# EUROPÄISCHE PATENTSCHRIFT

(11) **EP 1 681 908 B1**
(45) Veröffentlichungstag und Bekanntmachung des Hinweises auf die Patenterteilung: **17.05.2017**
(21) Anmeldenummer: 05000557.8
(22) Anmeldetag: 13.01.2005
(51) Int. Cl.: H02J 9/06, H05B 33/08, B60Q 3/46

(54) **NOTLEUCHTENANORDNUNG FÜR EIN FLUGZEUG**
EMERGENCY LIGHTING DEVICE FOR AIRCRAFT
DISPOSITIF D'ÉCLAIRAGE DE SECOURS POUR AVION

(43) Veröffentlichungstag der Anmeldung: 19.07.2006
(73) Patentinhaber: Airbus Operations GmbH, 21129 Hamburg (DE)
(72) Erfinder: Wisch, Bodo, Dipl.-Ing., 28309 Bremen (DE); Rowold, Lars, Dipl.-Ing., 26215 Wiefelstede (DE)
(74) Vertreter: Bird & Bird LLP

(56) Entgegenhaltungen:
- WO-A-91/11896
- WO-A-2004/082097
- DE-A1- 3 112 314
- US-A- 5 739 639
- US-A- 5 850 113
- US-A1- 2002 180 268

## Beschreibung

Die Erfindung betrifft eine Notleuchtenanordnung für ein Flugzeug, mit mindestens einer Notleuchte, die Notleuchtmittel aufweist und einer Notstromquelle zur Versorgung der Notleuchtmittel bei Ausfall eines Bordnetzes des Flugzeugs.

Es ist bekannt, Notleuchten in einem Flugzeug beim Ausfall des Bordnetzes mittels Notstromeinheiten. mit wiederaufladbaren Batterien zu versorgen. Je nach Kapazität der wiederaufladbaren Batterien kann eine Notstromeinheit eine bestimmte Anzahl von Notleuchten versorgen. Die wiederaufladbaren Batterien müssen jedoch regelmäßig getestet sowie aufgrund ihrer begrenzten Lebensdauer gelegentlich ausgetauscht werden, was einen erheblichen Wartungsaufwand bedeutet. Die batteriegespeisten Notstromeinheiten können nur an bestimmten Positionen im Flugzeug installiert werden, die einen Zugang gestatten, beispielsweise hinter Wartungsklappen. Zudem weisen die batteriegespeisten Notstromeinheiten ein relativ hohes Gewicht auf. Bei einer Mehrzahl von Notleuchten pro Notstromeinheit kann eine aufwendige und mit zusätzlichem Gewicht verbundene Verkabelung erforderlich sein, um bei einem Ausfall einer Notstromeinheit, beispielsweise infolge eines angenommenen Kabinenbruchs, eine möglichst umfassende Notbeleuchtung zu gewährleisten.

Die WO 2004/082097 betrifft eine Notbeleuchtung mit einem elektrischen Leuchtmittel, welches bei Absinken einer Netzspannung unter einen vorgebbaren Wert an eine von der Netzspannung mittels einer Ladeschaltung aufladbare Energiequelle schaltbar ist, z.B. mittels eines elektronischen Schalters, wobei die Energiequelle aus zumindest einem Speicherkondensator hoher Kapazität besteht und als Leuchtmittel Leuchtdioden vorgesehen sein können.

Die US 2003 0026092 A1 betrifft eine tragbare wiederaufladbare Blinkleuchte, die zur Montage als Komfort-Leuchte in einem Kraftfahrzeug eingerichtet ist. Zur unabhängigen Stromversorgung ist ein Kondensator vorgesehen. Die Versorgung der Leuchtmittel über den Kondensator kann mittels eines Schalter durch einen Benutzer ein- und ausgeschaltet werden.

Die DE 31 12 314 A betrifft eine Sicherheitsbeleuchtungsanlage mit einer Schaltung, bei der Leuchten zwischen Netzversorgung und Batterie umgeschaltet werden, wenn die Netzspannung zusammenbricht.

Die Aufgabe der vorliegenden Erfindung besteht darin, eine Notleuchtenanordnung für ein Flugzeug bereitzustellen, bei denen der Wartungsaufwand reduziert und die Systemzuverlässigkeit verbessert ist. Darüber hinaus ist eine für den Einsatz im Flugzeug gewichtsoptimierte Bauweise zu gewährleisten.

Die Erfindung löst diese Aufgabe mit den Merkmalen des Anspruchs 1, insbesondere dadurch, daß die Notstromquelle mindestens einen Kondensator zum Speichern der zum Betrieb der Notleuchtmittel erforderlichen Energie aufweist. Aufgrund der Verwendung von im wesentlichen wartungsfreien Kondensatoren als Speichermittel kann auf wartungsintensive wiederaufladbare Batterien verzichtet werden. "Im wesentlichen wartungsfrei" bedeutet im Mittel wartungsfrei über die durchschnittliche Lebensdauer eines Großraumflugzeuges. Es ist daher möglich, dass bei einer Mehrzahl von Notleuchten in einem Flugzeug vorzugsweise jede eine eigene Notstromquelle aufweist, ohne den Wartungsaufwand dadurch zu erhöhen. Hierdurch kann die Leitungslänge für die Leitungen zwischen der Notstromquelle und den Leuchtmitteln erheblich reduziert werden, was eine Montagevereinfachung und Gewichtsersparnis bewirkt. Die Notleuchte muss dann keine externen Anschlüsse für Notstrom-Versorgungsleitungen aufweisen. Bei einem Ausfall einer Notstromquelle ist ggf. lediglich eine einzige Notleuchte beeinträchtigt. Eine aufwendige Verkabelung zur Sicherstellung einer möglichst umfassenden Notbeleuchtung ist in diesem Fall entbehrlich.

Durch die Verwendung von Kondensatoren anstelle von wiederaufladbaren Batterien kann sich insgesamt eine Gewichtsersparnis für das Fahrzeug ergeben. Mit dem automatischen Einschalten der Leuchtmittel mittels eines Steuermitteis bei einem Ausfall des Bordnetzes ist somit eine Notbeleuchtung ohne eine notwendige Betätigung gewährleistet. Die Funktion der Notleuchtmittel, nämlich den Notbetrieb auch bei einem Ausfall des Bordnetzes, zu gewährleisten, erhöht zudem die Sicherheit der Passagiere. Die Fluchtwege sind maximal beleuchtet und bieten die Voraussetzung für eine schnelle Notevakuierung.

Vorzugsweise ist die Kapazität des Kondensators ausreichend, um die Notleuchtmittel mindestens 300 s, vorzugsweise mindestens 600 s zu betreiben, um eine ausreichende Notbeleuchtungs-Zeitspanne zum sicheren Verlassen des Fahrzeugs sicherzustellen. Vorzugsweise werden die Notleuchtmittel mit einer gegenüber der Bordnetzspannung reduzierten Spannung betrieben, um die für eine bestimmte Betriebsspanne der Notleuchtmittel benötigte Kapazität des Kondensators und damit dessen Abmessungen und Gewicht gering halten zu können. Zu demselben Zweck ist die Leistungsaufnahme der Notleuchtmittel vorzugsweise möglichst gering. Die Notleuchtmittel können vorzugsweise LEDs sein.

Es ist vorteilhaft, wenn bei einer Mehrzahl von Notleuchten in einem Flugzeug jeder Notleuchte eine eigene Notstromquelle zugeordnet ist. Dies ist aber nicht zwingend erforderlich. Eine Notstromquelle kann auch jeweils einer Mehrzahl von Notleuchten zugeordnet sein. Dieser Aspekt ist insbesondere für die Nachrüstung von Flugzeugen von Bedeutung, wobei konventionelle Notstromquellen durch erfindungsgemäße Notstromquellen ersetzt werden.

Weitere vorteilhafte Merkmale gehen aus der folgenden Erläuterung der Erfindung anhand bevorzugter Ausführungsformen unter Bezugnahme auf die beigefügten Figuren hervor. Dabei zeigt:
- Fig. 1:: eine schematische Darstellung einer Notleuchtenanordnung in einem Flugzeug,
- Fig. 2:: eine schematische Ansicht einer Notleuchte
- und Fig. 3: eine weitere Ausführungsform einer Notleuchtenanordnung.

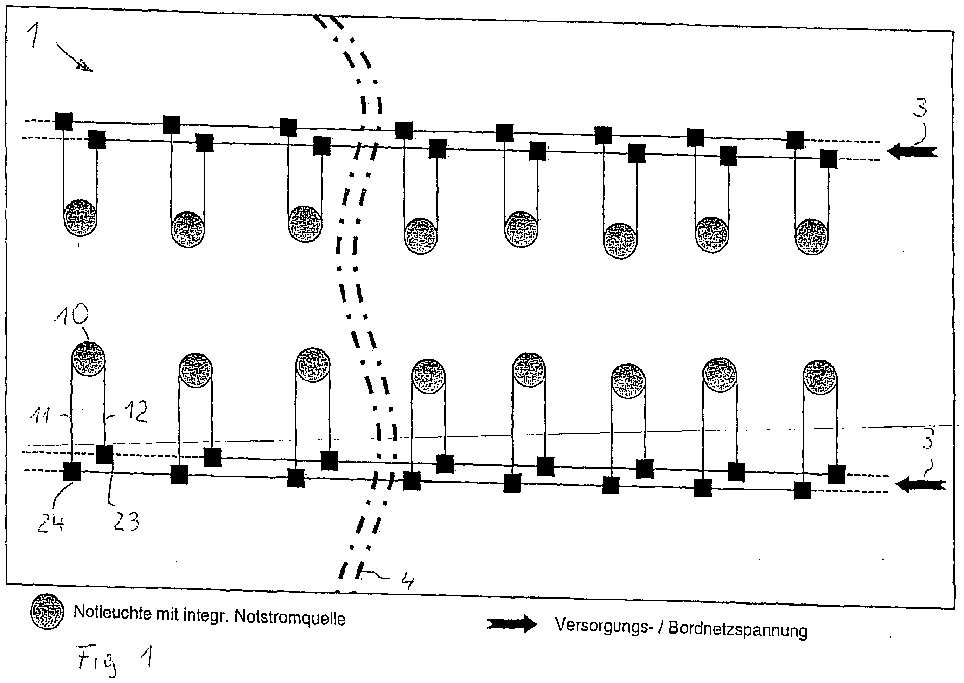

In Fig. 1 ist eine Notleuchtenanordnung 1 gezeigt, die in einer Passagierkabine 2 mittels einer Versorgung über ein Bordnetz 3 betrieben wird. Jedoch auch bei Ausfall einer derartigen Versorgung muss eine derartige Notleuchtenanordnung 1 funktionsfähig bleiben. So ist es ein sicherheitsrelevanter Aspekt, der gegenüber den Behörden nachgewiesen werden muss, das im Falle einer Notlandung mit einem nicht auszuschließenden Bruch des Flugzeugrumpfes (Kabinenbruchlinie 4) mindestens 75% der Leuchten weiterhin funktionsfähig sind. Die Notleuchtenanordnung 1 beinhaltet in Passagierkabinen 4 bzw. auch in Frachträumen eines Flugzeuges anwendbare Notleuchten 10, die regelmäßig verteilt angeordnet sind, damit Personen den Passagier- oder Frachtraum auch bei einem Ausfall des Bordnetzes sicher verlassen können. Mit der vorliegenden Lösung ist es sichergestellt, dass bei Ausfall des Bordnetzes 3 Energiespeicher in den Notleuchten 10 selbst zur Verfügung stehen uns somit eine autarke Versorgung der Leuchten zumindest für eine geforderte Zeit von mindestens 300s, die für eine Notevakuierung der Passagiere zur Verfügung müssen, ermöglicht ist.
Die Notleuchte 10 ist über die Leitungen 11, 12 mit dem Bordnetz verbunden und weist entsprechende Anschlüsse 23, 24 auf. Die Leitung 11 kann ein Gleichspannungs-Bordpotential, beispielsweise 28 V aufweisen, die Leitung 12 kann beispielsweise 0 V-Potential (DC RTN) aufweisen.

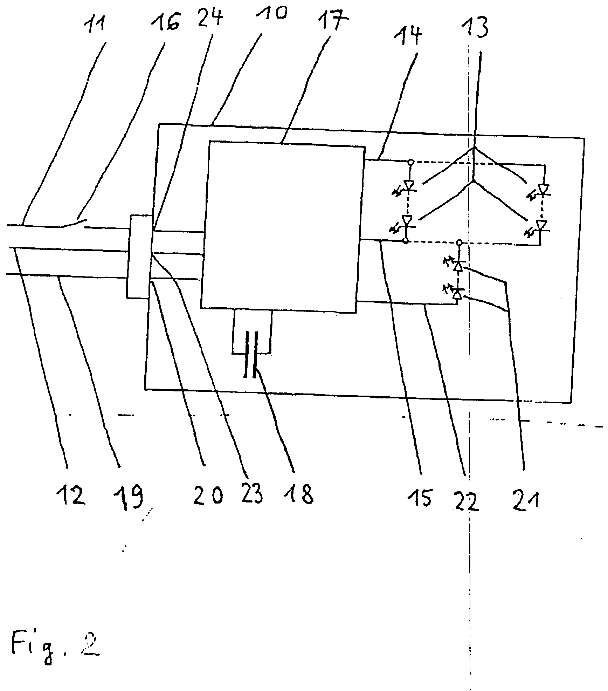

Eine detaillierte Beschreibung einer möglichen Ausführungsform der Notleuchte 10 mit einer integrierten Notstromquelle erfolgt anhand der Fig. 2. Die Notleuchte 10 umfasst als LEDs ausgeführte Leuchtmittel 13 für den Normalbetrieb, d.h. den Betrieb bei intakter Bordnetzspannung. Die Leuchtmittel 13 für den Normalbetrieb werden vorzugsweise mit der durch die Leitungen 11, 12 definierten Bordgleichspannung betrieben. Zwischen Leitungen 14, 15 ist eine geeignete Anzahl von Leuchtmittel 13 in Reihe geschaltet und ggf. mehrere Reihen von Leuchtmitteln 13 parallel geschaltet. Bei geschlossenem Schalter 16 verbindet die Steuereinrichtung 17 die Versorgungsleitungen 11, 12 mit den Leitungen 14, 15, so dass die Leuchtmittel 13 mit Bordgleichspannung versorgt werden und einen Innenraum des Flugzeugs, beispielsweise einen Passgier- bzw. Frachtraum beleuchten. Die Leuchtmittel 13 für den Normalbetrieb können mittels des Schalters 16 manuell aus- und eingeschaltet werden.

Die Notleuchte 10 muss nicht zwangsläufig Leuchtmittel 13 für den Normalbetrieb aufweisen, wenn beispielsweise separate Leuchten für den Normalbetrieb vorgesehen sind.

Die Notleuchte 10 umfasst weiterhin einen Kondensator 18, der mit einer Steuereinrichtung 17 verbunden ist. Im Normalbetrieb hält die Steuereinrichtung 17 den Kondensator 18 mittels einer geeigneten Ladespannung aus dem Bordnetz über die Leitungen 11, 12 in aufgeladenem Zustand. Die Notleuchte 10 umfasst weiterhin als LEDs ausgeführte Notleuchtmittel 21, die geeignet geschaltet sind, um mit der vom Kondensator 18 bereitgestellten Spannung betrieben zu werden. Zur Bereitstellung einer geeigneten Notversorgungsspannung können auch mehrere Kondensatoren 18 in Reihe geschaltet werden.

Die Notleuchte 10 umfasst einen Eingang 20, der mit einer Signalleitung 19 verbunden ist, die einen Ausfall der Bordnetzspannung anzeigt und daher zweckmäßigerweise mit dem Bordnetz verbunden ist. Beispielsweise kann die Signalleitung 19 ein Gleichspannungs-Bordpotential, beispielsweise 28 V, aufweisen. Wenn der Schalter 16 in der 0 V-Leitung 12 angeordnet ist, kann die Gleichspannungs-Bordpotential-Leitung 11 als Signalleitung genutzt werden und die Signalleitung 19 entbehrlich sein.

Wenn das Bordnetz ausfällt, führt dies zu einem entsprechenden Spannungseinbruch in der Signalleitung 19. Der Eingang 20 ist mit der Steuereinrichtung 17 verbunden. Wenn die Steuereinrichtung 17 einen Ausfall des Bordnetzes registriert, insbesondere infolge eines entsprechenden Signals über die Signalleitung 19, verbindet die Steuereinrichtung 17 die Anschlussleitungen des Kondensators 18 mit den Versorgungsleitungen 22, 15 für die Notleuchtmittel 21. Die Steuereinrichtung 17 hat insofern die Funktion eines automatischen elektronischen Schalters. Die Leuchtrnittel 13 für den Normalbetrieb und die Notleuchtmittel 21 können dieselbe 0 V-Potentialleitung 15 verwenden. Die Notleuchtmittel 21 werden mit der in dem Kondensator 18 gespeicherten elektrischen Energie betrieben, wodurch der Kondensator 18 entladen wird. Die Kapazität des Kondensators 18 ist ausreichend, um die Notleuchtmittel 21 für mindestens 5, vorzugsweise mindestens 10 min. zu betreiben. Diese Zeitspanne ist in der Regel ausreichend, damit Personen das Flugzeug s sicher verlassen können. Vorzugsweise beträgt die Kapazität des Kondensators 18 mindestens 2 F, vorzugsweise mindestens 5 F, beispielsweise etwa 10 F. Es kann sich beispielsweise um einen sog. Ultra-Cap handeln. Die von dem Kondensator 18 erzeugte Notversorgungsspannung für die Notleuchtmittel 21 beträgt vorzugsweise weniger als 15 V, beispielsweise etwa 6 V.

Nachdem ein Signal über die Signalleitung 19 anzeigt, dass das Bordnetz wieder in Betrieb ist, lädt die Steuereinrichtung 17 den Kondensator 18 mit einer geeigneten Ladespannung und einem geeignetem Ladestrom aus dem Bordnetz über die Leitungen 11, 12 wieder auf. Die Steuereinrichtung 17 wird daher als Ladeeinrichtung für den Kondensator 18 genutzt. Die Ladeleistung ist ausreichend gering, um das Bordnetz nicht zu überlasten, und liegt vorzugsweise im Bereich von weniger als 5 W. Das Aufladen des Kondensators 8 kann je nach Ladestrom und Kapazität des Kondensators 18 beispielsweise innerhalb von weniger als 10 s geschehen.
Im vorliegenden Ausführungsbeispiel sind die Steuereinrichtung 17 und der Kondensator 18 vorzugsweise in die Notleuchte 10 integriert, was insbesondere den Installationsaufwand verringert. Dies ist aber nicht zwingend erforderlich.

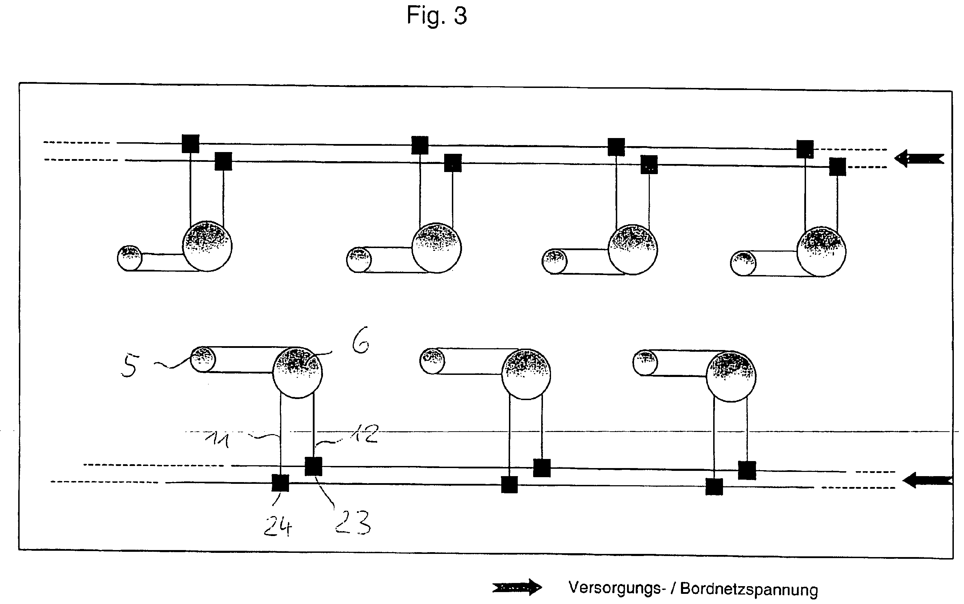

Die Steuereinrichtung 17 und der Kondensator 18 können auch separat von der Notleuchte 10, beispielsweise als separate Notstromeinheit 5 angeordnet sein. Fig. 3 zeigt ein Ausführungsbeispiel, bei dem eine derartige Notstromeinheit 5 dezentral im Bereich herkömmlicher Notleuchten 6, möglicherweise auch für mehr als eine Notleuchte 6 einsetzbar. Dies würde die Nutzung herkömmlicher Notleuchten 6 gestatten und das Nachrüsten von Notstromquellen 5 erleichtern.

## Patentansprüche

1. Notleuchtenanordnung für ein Flugzeug mit
einem Bordnetz (3),
mindestens einer Notleuchte (10) mit jeweils mindestens einem Notleuchtmittel (21) für einen Ausfall des Bordnetzes,
mindestens einem Kondensator (18) zum Speichern von Energie für die mindestens eine Notleuchte (10), so dass sie über einen vorgegebenen Zeitraum betrieben werden kann,
und
einem Steuermittel (17) in jeder Notleuchte (10), das mit dem mindestens einen Notleuchtmittel (21), mit dem Bordnetz (3) und dem mindestens einen Kondensator (18) verbunden ist und das
bei Ausfall des Bordnetzes (3) das mindestens eine Notleuchtmittel (21) mit dem mindestens einen Kondensator (18) verbindet,
**dadurch gekennzeichnet, dass** die Notleuchtenanordnung mehrere Leuchtmittel (13) für den Normalbetrieb aufweist und dass das Steuermittel (17)
- bei Normalbetrieb des Bordnetzes (3) die Leuchtmittel (13) für den Normalbetrieb mit dem Bordnetz (3) verbindet und den mindestens einen Kondensator (18) in einem aufgeladenen Zustand hält und
- bei erneuter Betriebsaufnahme des Bordnetzes den mindestens einen Kondensator (18) mittels einer Ladespannung aus dem Bordnetz (3) wieder auflädt, so dass das Bordnetz nicht überlastet wird.

2. Notleuchtenanordnung nach Anspruch 1, **dadurch gekennzeichnet, dass** die Betriebsspannung der Notleuchtmittel (21) gegenüber der Bordspannung reduziert ist.

3. Notleuchtenanordnung nach Anspruch 1 oder 2, **dadurch gekennzeichnet, dass** die Notleuchtmittel (21) mindestens eine LED umfassen.

4. Notleuchtenanordnung nach einem der Ansprüche 1 bis 3, **dadurch gekennzeichnet, dass** sie Lademittel zum Laden des Kondensators (18) über das Bordnetz umfasst.

5. Notleuchtenanordnung nach Anspruch 4, **dadurch gekennzeichnet, dass** die Lademittel von den Steuermitteln (17) gebildet werden.

6. Notleuchtenanordnung nach einem der Ansprüche 1 bis 5, **dadurch gekennzeichnet, dass** die Notstromquelle eine Mehrzahl in Reihe geschalteter Kondensatoren (18) umfasst.

7. Notleuchtenanordnung nach Anspruch 1, **dadurch gekennzeichnet, dass** sie eine Mehrzahl von Notleuchten (10;6) umfasst, wobei mindestens zwei Notleuchten (6) eine eigene Notstromquelle (5) zugeordnet ist.

## Claims

1. An emergency lighting arrangement for an aircraft with an onboard power system (3), at least one emergency light (10) with at least one respective emergency light source (21) for a failure of the onboard power system (3), at least one capacitor (18) for storing power for the at least one emergency light (10) so that it can be operated for a specified time period, and a control means (17) in each emergency light (10), which is connected to the at least one emergency light source (21), to the onboard power system (3), and to the at least one capacitor (18) and which, in the event of a failure of the onboard power system (3), connects the at least one emergency light source (21) to the at least one capacitor (18),
**characterized in that** the emergency lighting arrangement has a plurality of light sources (13) for normal operation and that the control means (17)
- during normal operation of the onboard power system (3), connects the light sources (13) for normal operation to the onboard power system (3) and maintains the at least one capacitor (18) in a charged state, and
- when the onboard power system resumes operation, recharges the at least one capacitor (18) by means of a charging voltage from the onboard power system (3) so that the onboard power system is not overloaded.

2. The emergency lighting arrangement according to claim 1, **characterized in that** the operating voltage of the emergency light sources (21) is reduced compared to the onboard voltage.

3. The emergency lighting arrangement according to claim 1 or claim 2, **characterized in that** the emergency light sources (21) comprise at least one LED.

4. The emergency lighting arrangement according to one of claims 1 through 3, **characterized in that** it comprises charging means for charging the capacitor (18) via the onboard power system.

5. The emergency lighting arrangement according to claim 4, **characterized in that** the charging means are formed by the control means (17).

6. The emergency lighting arrangement according to one of claims 1 through 5, **characterized in that** the emergency power source comprises a plurality of capacitors (18) connected in series.

7. The emergency lighting arrangement according to claim 1, **characterized in that** it comprises a plurality of emergency lights (10; 6), wherein a separate emergency power source (5) is allocated to at least two emergency lights (6).

## Revendications

1. Système d'éclairage de secours pour un avion comprenant un circuit de bord (3), au moins un éclairage de secours (10) comprenant respectivement au moins un moyen d'éclairage de secours (21) pour une panne du circuit de bord, au moins un condensateur (18) destiné à stocker l'énergie pour l'au moins un éclairage de secours (10), de sorte qu'il puisse fonctionner sur une période de temps prédéfinie, et un moyen de commande (17) dans chaque éclairage de secours (10) qui est relié à l'au moins un éclairage de secours (21), au circuit de bord (3) et à l'au moins un condensateur (18) et qui en cas de panne du circuit de bord (3) relie l'au moins un éclairage de secours (21) à l'au moins un condensateur (18), **caractérisé en ce que** le système d'éclairage de secours présente plusieurs moyens d'éclairage (13) pour le fonctionnement normal et **en ce que** le moyen de commande (17), lors du fonctionnement normal du circuit de bord (3) relie le moyen d'éclairage (13) pour le fonctionnement normal au circuit de bord (3) et maintient l'au moins un condensateur (18) dans un état suralimenté et lors d'une nouvelle mise en service du circuit de bord charge de nouveau l'au moins un condensateur (18) au moyen d'une tension de charge provenant du circuit de bord (3) de sorte que le circuit de bord ne soit pas surchargé.

2. Système d'éclairage de secours selon la revendication 1, **caractérisé en ce que** la tension de fonctionnement du moyen d'éclairage de secours (21) est réduite par rapport à la tension de bord.

3. Système d'éclairage de secours selon la revendication 1 ou la revendication 2, **caractérisé en ce que** les moyens d'éclairage de secours (21) comprennent au moins une DEL.

4. Système d'éclairage de secours selon l'une quelconque des revendications 1 à 3, **caractérisé en ce qu'**il comprend des moyens de charge destinés à charger le condensateur (18) par l'intermédiaire du circuit de bord.

5. Système d'éclairage de secours selon la revendication 4, **caractérisé en ce que** les moyens de charge sont conçus par les moyens de commande (17).

6. Système d'éclairage de secours selon l'une quelconque des revendications 1 à 5, **caractérisé en ce que** la source de courant de secours comprend une pluralité de condensateurs (18) connectés en série.

7. Système d'éclairage de secours selon la revendication 1, **caractérisé en ce qu'**il comprend une pluralité d'éclairage de secours (10, 6), au moins deux éclairages de secours (6) étant associés à une propre source de courant de secours (5).
